## Europäisches Patentamt

## European Patent Office

## Office européen des brevets

(19)

(11) Veröffentlichungsnummer: **0 056 101**
**B1**

(12) **EUROPÄISCHE PATENTSCHRIFT**

(45) Veröffentlichungstag der Patentschrift:
06.02.85

(51) Int. Cl.⁴: **B 65 G 51/32**

(21) Anmeldenummer: **81109325.1**

(22) Anmeldetag: **30.10.81**

(54) **Rohrpoststation.**

(30) Priorität: **09.01.81 DE 3100399**

(43) Veröffentlichungstag der Anmeldung:
**21.07.82 Patentblatt 82/29**

(45) Bekanntmachung des Hinweises auf die Patenterteilung:
**06.02.85 Patentblatt 85/6**

(84) Benannte Vertragsstaaten:
**AT BE CH FR GB IT LI LU NL SE**

(56) Entgegenhaltungen:
**CH - A - 500 891**
**DE - A - 2 454 641**
**DE - A - 2 652 276**
**DE - A - 2 905 994**
**DE - A - 2 946 292**
**DE - B - 1 908 766**
**FR - A - 598 235**

(73) Patentinhaber: **Aerocontact GmbH & Co. KG, Plochinger Strasse 54, D-7301 Deizisau (DE)**

(72) Erfinder: **Müschenborn, Axel, Gottlieb Daimler Strasse 16, D-7053 Kernen (DE)**
Erfinder: **Blessing, Albert, Schurwaldstrasse, D-7302 Ostfildern (DE)**
Erfinder: **Höfler, Bruno, Sommerhalde 22, D-7050 Schorndorf (DE)**

(74) Vertreter: **Patentanwälte Dipl.-Ing. W. Scherrmann Dr.-Ing. R. Rüger, Webergasse 3 Postfach 348, D-7300 Esslingen (Neckar) (DE)**

## Beschreibung

Die Erfindung betrifft eine für Durchlauf, Absendung und Empfang von Rohrpostbüchsen eingerichtete Rohrpoststation, mit einem aus dem Zuge eines durchgehenden Fahrrohres herausführbaren Rohrstück, das in seiner Ruhestellung beidends abgedichtet mit dem Fahrrohr verbunden ist und durch das in der herausgeführten Stellung eine ankommende Rohrpostbüchse zu einer Auffangstelle überführbar ist, mit einem eine abzusendende Rohrpostbüchse aufnehmenden, eine lösbare Sperre für die Rohrpostbüchse aufweisenden Speicherrohrstutzen, mit einer beidseitig des herausführbaren Rohrstückes an das Fahrrohr angeschlossenen, ein Ventil mit Ventilverschlussglied enthaltenden Bypass-Leitung, sowie mit einem im Zuge des Fahrrohres zwischen den Anschlüssen der Bypass-Leitung angeordneten Verschlussschieber, durch den der Luftstrom im Fahrrohr zwischen den Anschlüssen der Bypass-Leitung absperrbar ist.

Bei einer derartigen aus der DE-A-2 905 994 bekannten Rohrpoststation ist das aus dem Fahrrohr herausführbare Rohrstück in dem Gehäuse der Rohrpoststation rechtwinklig zu der Längsachse des Rohrstückes verschieblich gelagert und kann so mittels einer translatorischen Bewegung aus einer ersten Stellung, in der es sich im Zuge des Fahrrohres befindet, in eine zweite Stellung überführt werden, in der es einerseits mit einem Speicherrohrstutzen und andererseits mit einer darunter befindlichen Auffangstelle fluchtet.

Da bei dieser Rohrpoststation das herausführbare Rohrstück gleichzeitig zum Überführen einer in dem Speicherrohrstutzen eingelegten Rohrpostbüchse in das Fahrrohr dient, sind an dem Rohrstück Einrichtungen vorgesehen, die ein Durchfallen der Rohrpostbüchse durch das Rohrstück bei gelöster Sperre am Speicherrohrstutzen verhindert. Diese Einrichtung wird von dem Verschlussschieber gebildet, mit dem das Fahrrohr im Bereich zwischen den Anschlussstellen der Bypass-Leitung beim Empfang einer Rohrpostbüchse abgeschlossen wird, um die Rohrpostbüchse mit Hilfe des sich über dem Schieber bildenden Luftpolsters langsam abzubremsen.

Zum wahlweisen Absperren der Bypass-Leitung dient ein darin angeordnetes Rückschlagventil, das von dem Luftstrom im Fahrrohr bei von oben ankommender Rohrpostbüchse geöffnet, bei entgegengesetzter Luftströmung hingegen geschlossen wird. Das selbsttätig arbeitende Rückschlagventil in der Bypass-Leitung erschwert aber den Empfang und die Steuerung einer von unten her in die Rohrpoststation eintretenden Rohrpostbüchse, die nämlich, um ordnungsgemäss abgebremst und von dem Rohrstück in die Auffangstelle überführt werden zu können, zunächst nach oben aus der Rohrpoststation herausgefahren werden muss, wobei der Luftstrom die Rohrpostbüchse zumindest in der Schwebe halten muss. Würde nämlich umgehend, nachdem die Rohrpostbüchse die Rohrpoststation passiert hat, der Luftstrom abgeschaltet werden, dann würde die Rohrpostbüchse noch ehe der Verschlussschieber geschlossen werden kann, möglicherweise in das untere Fahrrohrende zurückfallen. Es ist deshalb erforderlich, noch während des aufwärts gerichteten Luftstromes den Verschlussschieber zu schliessen, um auf alle Fälle ein Herunterfallen der Rohrpostbüchse bei abgeschaltetem Luftstrom zu verhindern. In dieser Betriebssituation arbeitet das Gebläse aber zwangsläufig gegen das geschlossene Verschlussglied und auch gegen das bei dieser Strömungsrichtung sich schliessende Rückschlagventil in der Bypass-Leitung, womit der Nutzen der Bypass-Leitung zumindest in dieser Empfangsrichtung zunichte gemacht ist. Darüber hinaus hat ein Rückschlagventil, auch wenn es in Durchlassrichtung betrieben wird, einen verhältnismässig hohen Strömungswiderstand und es ist nicht ausgeschlossen, dass an dem geöffneten Ventil lästige Strömungsgeräusche auftreten, denn das Verschlussglied bleibt ständig im Strömungsweg.

Eine Verbesserung bringt zwar insofern die Anordnung nach der DE-B-1 908 766, bei der zum Verschliessen des Fahrrohres und der Bypass-Leitung ein Schieber dient, der entweder das Fahrrohr oder die Bypass-Leitung verschliesst. Diese Anordnung sorgt dafür, dass entweder die Bypass-Leitung oder das Fahrrohr völlig frei ist, so dass keine Strömungsgeräusche entstehen können. Darüber hinaus ermöglicht diese Anordnung einen einfachen Empfang einer von unten ankommenden Rohrpostbüchse, die zunächst durch die Fahrluft nach oben aus der Rohrpoststation herausgefahren wird, wobei, sobald die Rohrpostbüchse passiert hat, der Verschlussschieber für das Fahrrohr geschlossen wird, während gleichzeitig die Bypass-Leitung freigegeben wird. Damit ist während der gesamten Zeit eine ungehinderte Strömung der Fahrluft durch die Rohrpoststation möglich.

Jedoch ist bei dieser bekannten Rohrpoststation der Verschlussschieber für das Fahrrohr oberhalb des Rohrstückes, das in diesem Falle herausschwenkbar angeordnet ist, vorgesehen. Dies ist insofern unzweckmässig, als die empfangene und abgebremste Rohrpostbüchse beim Öffnen des Verschlussschiebers für das Fahrrohr aus einer verhältnismässig grossen Höhe in die neben dem Fahrrohr angeordnete Auffangstelle fällt, wobei die Büchse entsprechende Geräusche entwickelt und obendrein das in der Büchse enthaltene Gut einem erheblichen Stoss ausgesetzt ist.

Vorkehrungen für die Eingabe einer Rohrpostbüchse sind bei dieser Rohrpoststation nicht getroffen.

Aus der CH-A-500 891 ist schliesslich eine Rohrpoststation bekannt, bei der ebenso wie bei der vorher erläuterten Rohrpoststation, das bewegliche Rohrstück schwenkbar angebracht ist, und zwar an seinem unteren Ende. Bei dieser Rohrpoststation erfolgt die Eingabe einer Rohrpostbüchse mittels eines neben dem oberen freien Ende des Fahrrohres angeordneten Speicherrohrstutzens, von dem aus bei gelöster Sperre die Rohrpostbüchse in das auf ihn ausgerichtete herausgeschwenkte Fahrrohrstück fällt, was eine besonders einfache Steuerung ermöglicht und auch keine nennenswerten Geräusche erzeugt.

Bremseinrichtungen zum Abbremsen der ankommenden Rohrpostbüchse sind hingegen nicht vorhanden, womit die ankommende Rohrpostbüchse mit unverminderter Geschwindigkeit auf ein Ablenkorgan auftritt, mit dem Ergebnis, dass der Empfang mit erheblicher Geräusch- und Stossbelastung für das in der Rohrpostbüchse enthaltene Gut verbunden ist.

Aufgabe der Erfindung ist es deshalb, eine für Durchlauf, Absendung und Empfang von Rohrpostbüchsen eingerichtete Rohrpoststation zu schaffen, die sich bei sehr einfachem, betriebssicherem Aufbau durch einen leisen Betrieb in allen Betriebssituationen auszeichnet und die eine einfache Steuerung für das Zusammenspiel zwischen schwenkbarem Rohrstück und Verschlusseinrichtungen ermöglicht, wobei ferner ein Einblasen von Luft aus dem Fahrrohr in den Raum, in dem die Rohrpoststation aufgestellt ist, vermieden ist.

Zur Lösung dieser Aufgabe ist die eingangs genannte Rohrpoststation erfindungsgemäss dadurch gekennzeichnet, dass dem herausführbaren Rohrstück, das an einem Ende des Fahrrohres schwenkbar befestigt ist, eine die abzusendende Rohrpostbüchse in das Fahrrohr einleitende Leitvorrichtung zugeordnet ist, dass der Verschlussschieber für das Fahrrohr im Bereich des freien Endes des Fahrrohres ausserhalb des herausschwenkbaren Rohrstückes angeordnet und mit dem ebenfalls als Schieber ausgebildeten Verschlussglied der Bypass-Leitung einheitlich ausgeführt ist und dass der Schieber zwischen dem Fahrrohr und einem neben diesem angeordneten Teil der Bypass-Leitung hin- und herverschieblich gelagert und mit einer signalgesteuerten Antriebsvorrichtung gekuppelt ist, derart, dass in Abhängigkeit von einem den bevorstehenden Empfang der Rohrpostbüchse anzeigenden Empfangssignal bei geöffneter Bypass-Leitung das Fahrrohr verschlossen und bei im Normalbetrieb verschlossener Bypass-Leitung das Fahrrohr geöffnet ist.

Bei dieser Rohrpoststation wird vor dem Empfang einer Rohrpostbüchse das Fahrrohr verschlossen, während die Bypass-Leitung geöffnet ist, so dass die Luft in dem Fahrrohr im Bereiche der Rohrpoststation über die Bypass-Leitung strömt. Die ankommende Rohrpostbüchse läuft in dem noch im Zuge des Fahrrohres liegenden herausschwenkbaren Rohrstück auf das sich vor dem Verschlussstück in der Fahrrohrleitung aufbauende Druckluftpolster auf und wird deshalb sanft und geräuschlos abgebremst. Sowie die Rohrpostbüchse zum Stillstand gekommen ist, wird das Rohrstück aus dem Zuge der Fahrleitung herausgeschwenkt, womit die Rohrpostbüchse einfach im freien Fall aus dem Rohrstück austreten kann. Damit ist einerseits jede Geräusch- oder Geruchsbelästigung durch aus dem Fahrrohr während des Empfangsvorganges austretende Luft vermieden, während andererseits ein sicherer und geräuschloser Empfang der Rohrpostbüchse gewährleistet ist und obendrein die Möglichkeit besteht, auch von der Rohrpoststation selbst aus Rohrpostbüchsen abzusenden.

Bei in der ausgeschwenkten Stellung stehendem Rohrstutzen ist das Fahrrohr durch das Verschlussstück zweckmässigerweise verschlossen.

Das herausschwenkbare Rohrstück ist mit Vorteil mit der Leitvorrichtung für die abzusendenden Rohrpostbüchsen gekoppelt, so dass es zwangsläufig mitbewegt wird. Die Leitvorrichtung kann eine einenends im Bereiche des Speicherrohrstutzens gelenkig gelagerte, mit dem herausschwenkbaren Rohrstück verbundene Rinne sein, auf die im Bereiche ihres freien Endes ein Führungsrohrstück aufgesetzt ist.

Schliesslich ist es zweckmässig, wenn die Rohrpoststation ein kastenartiges Gehäuse aufweist, in dem die Bypass-Leitung entlang benachbarter Wände verlaufende angeordnet ist, und das eine Auswurföffnung und/oder ein Auffangbehältnis für die jeweils ankommende Rohrpostbüchse aufweist.

In der Zeichnung ist ein Ausführungsbeispiel des Gegenstandes der Erfindung dargestellt. Es zeigen:

Fig. 1 eine Rohrpostanlage mit Rohrpoststation gemäss der Erfindung in schematischer Darstellung,

Fig. 2 eine Rohrpoststation gemäss der Erfindung in perspektivischer Darstellung bei geöffnetem Gehäuse, unter Veranschaulichung des Durchlauf- und Empfangsbetriebes und

Fig. 3 die Rohrpoststation nach Fig. 1 in einer entsprechenden Darstellung, unter Veranschaulichung des Sendebetriebes.

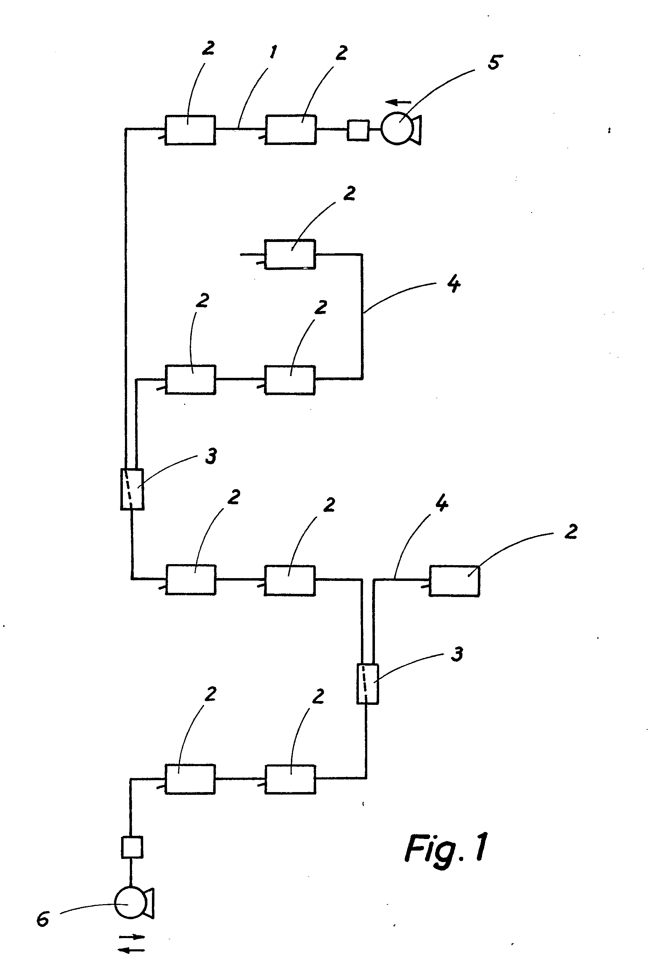

Die in Fig. 1 schematisch dargestellte Rohrpostanlage weist ein Fahrrohr 1 auf, in dem bei 2 angedeutete Rohrpoststationen liegen, die wahlweise für den Durchlauf, die Absendung und den Empfang von Rohrpostbüchsen betrieben werden können. Entsprechende Rohrpoststationen 2 sind über Weichen 3 und entsprechende Fahrrohre 4 an das (Haupt) Fahrrohr 1 angeschlossen, das seinerseits am einen Ende mit einem Druckgebläse 5 und am anderen Ende mit einem Saug/Druckgebläse 6 verbunden ist.

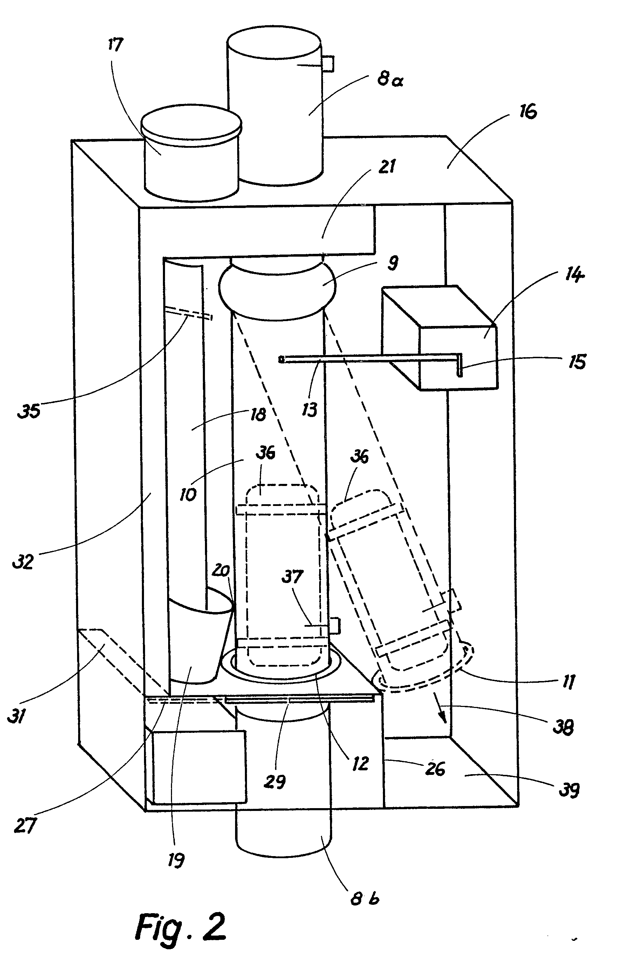

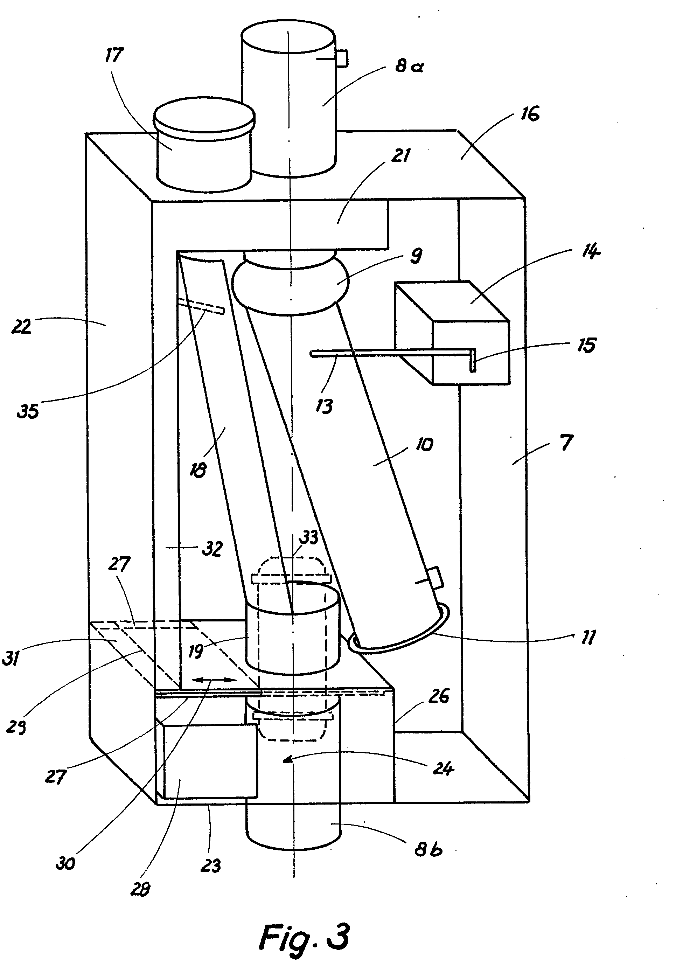

Jede der Rohrpoststationen 2 weist in der aus den Fig. 2, 3 ersichtlichen Weise ein rechteckiges, kastenartiges Gehäuse 7 auf, in das an gegenüberliegenden Seitenwänden zwei koaxiale Rohrstutzen 8a, 8b münden, an denen jeweils das Fahrrohr 1, 4 angeschlossen ist. An dem oberen Rohrstutzen 8a ist innerhalb des Gehäuses 7 über einen Faltenbalg oder eine Manschette 9 abgedichtet ein Rohrstück 10 angeschlossen, das normalerweise in der in Fig. 2 mit ausgezogenen Linien dargestellten Ruhestellung steht, in der es im Zuge der beiden Rohrstutzen 8a, 8b und damit des Fahrrohres 1, 4 liegt. Das herausschwenkbare Rohrstück 10 trägt an seinem unteren freien Ende eine Dichtung 11, die mit einer entsprechenden Dichtungseinrichtung 12 an dem zugeordneten Ende des Rohrstutzens 8b zusammenwirken kann, um eine luftdichte Verbindung zwischen dem Rohrstutzen 8b und dem in der Ruhestellung stehenden Rohrstück 10 zu erzielen. Mit dem Rohrstück 10 ist über einen Betätigungsarm 13 eine Stellvorrichtung 14 gekuppelt, die beispielsweise einen Elektromotor enthält, der über eine Kurbel 15 den Betätigungsarm 13 bewegen und damit das Rohrstück 10 aus der Ruhestellung in die herausgeschwenkte Stellung nach Fig. 3 verschwenken kann.

Seitlich neben dem oberen Rohrstutzen 8a ist im Bereiche der zugeordneten Gehäusewand 16 ein Speicherrohrstutzen 17 angeordnet, an den innerhalb des Gehäuses 7 eine Leitvorrichtung in Gestalt einer Rinne 18 gelenkig angeschlossen ist, die im Bereiche ihres freien Endes ein Führungsrohrstück 19 trägt. Die Leitrinne 18 ist bei 20 mit dem Rohrstück 10 fest verbunden, so dass bei einer Verschwenkung des Rohrstückes 10 in die Stellung nach Fig. 3 die Leitrinne 18 zwangsläufig so weit mit verschwenkt wird, dass ihr Führungsrohrstück 19 über der Mündung des unteren Rohrstutzens 8b zu stehen kommt.

An den oberen Rohrstutzen 8a ist oberhalb der im Bereiche des Faltenbalges 9 liegenden gelenkigen Verbindungsstelle des Rohrstückes 10 mit dem Rohrstutzen 8a eine Bypass-Leitung 21 angeschlossen, die den benachbarten Wänden 16, 22, 23 des Gehäuses 7 folgend in den Rohrstutzen 8b unterhalb dessen Verbindungsstelle mit dem Rohrstück 10 bei 24 mündet. Die Bypass-Leitung 21 ist in Gestalt einer in dem Kasten 7 angeordneten, etwa U-förmigen Kammer ausgebildet, die auf ihrer Innenseite zur Geräuschdämpfung eine Wandbeschichtung, beispielsweise aus Schaumstoff, tragen kann. In ihrem unteren Bereich weist die Bypass-Leitung 21 bei 26 eine kastenartige Gestalt auf. An der Oberseite dieses Kastens 26 sind zwei Schiebeführungen 27 angeordnet, auf denen ein Schieber 29 von einer bei 28 angedeuteten Antriebsvorrichtung in Richtung eines Doppelpfeiles 30 (Fig. 3) hin- und herverschieblich gelagert ist. Der abgedichtet geführte Schieber 29 ist derart bemessen und ausgelegt, dass er in der rechten Grenzstellung nach Fig. 3 den unteren Rohrstutzen 8b luftdicht abschliesst, während gleichzeitig eine in den Kasten 26 führende Öffnung 31 des parallel zu dem Rohrstutzen 8b neben diesem verlaufenden Bypass-Leitungsteiles 32 geöffnet ist, so dass die beiden Rohrstutzen 8a, 8b durch die Bypass-Leitung 21 miteinander verbunden sind. In der anderen Grenzstellung des Schiebers 29 ist die Öffnung 31 verschlossen, während andererseits der Rohrstutzen 8b geöffnet ist, was bedeutet, dass die Bypass-Leitung 21 versperrt ist und die beiden Rohrstutzen 8a, 8b durch das Rohrstück 10 frei durchgängig miteinander verbunden sind.

Die insoweit beschriebene Rohrpoststation arbeitet wie folgt:

Bei Absendung einer bei 33 in Fig. 3 gestrichelt dargestellten Rohrpostbüchse wird die Rohrpostbüchse 33 zunächst in den Speicherstutzen 17 eingeführt und dort von einer bei 35 angedeuteten Sperre gehalten. Anschliessend wird bei in seiner linken Grenzstellung (Fig. 3) befindlichen Schieber 29, d. h. bei verschlossener Bypass-Leitung 21, das Rohrstück 10 von der Stellvorrichtung 14 in die Stellung nach Fig. 3 herausgeschwenkt, womit das Führungsrohrstück 19 in eine mit dem Rohrstutzen 8b fluchtende Stellung überführt wird.

Nach dem Lösen der Sperre 35 gleitet die Rohrpostbüchse 33, wie in Fig. 3 gestrichelt dargestellt, in den unteren Rohrstutzen 8b und damit das Fahrrohr 4. Nachdem das Rohrstück 10 vorn der Stellvorrichtung 14 wieder in seine Ruhestellung nach Fig. 2 zurückgeführt ist, kann die Büchse von den nunmehr wirksam werdenden Gebläsen 5, 6 wahlweise in der einen oder in der anderen Richtung über das Fahrrohr 4 transportiert werden.

Beim Empfang einer Büchse in der Rohrpoststation erhält die Rohrpoststation von der Sendestation oder einer Zentrale aus ein das bevorstehende Eintreffen der Rohrpostbüchse anzeigendes Empfangssignal. Gesteuert von diesem Empfangssignal überführt die Antriebsvorrichtung 28 den Schieber 29 in die rechte Grenzstellung gemäss Fig. 2, in der er den Rohrstutzen 8b und damit das Fahrrohr 1, 4 versperrt, während gleichzeitig die Bypass-Leitung 21 geöffnet ist. Die über den Rohrstutzen 8a aus dem Fahrrohr 1, 4 eintretende Luft strömt nunmehr über die Bypass-Leitung 21 in den anderen Rohrstutzen 8b und den daran angeschlossenen Teil des Fahrrohres. Sowie die Rohrpostbüchse in dem Fahrrohr 1, 4 nur etwa 1 bis 2 Meter an die Rohrpoststation herangekommen ist, wird das Gebläse abgeschaltet, während die bei 36 in Fig. 2 dargestellte Rohrpostbüchse über den Rohrstutzen 8a in das Rohrstück 10 einfährt. Da das in der Ruhestellung stehende Rohrstück 10 auf seiner Unterseite durch den Schieber 29 luftdicht verschlossen ist, baut sich vor der ankommenden Rohrpostbüchse 36 ein Druckluftpolster auf, das eine sanfte Abbremsung der Rohrpostbüchse bewirkt. Die Rohrpostbüchse sinkt nach ihrer Abbremsung langsam nach unten, bis sie einen Rohrkontakt 37 in dem Rohrstück 10 betätigt. Die Kontaktbetätigung löst die Stellvorrichtung 14 aus, die nun ihrerseits das Rohrstück 10 in die in Fig. 2 gestrichelt dargestellte Stellung ausschwenkt, in der die Rohrpostbüchse 36 in Richtung des Pfeiles 38 sanft aus dem Rohrstück 10 herausfällt, um entweder in einem bei 39 vorgesehenen Auffangbehältnis aufgefangen zu werden, oder durch eine an dieser Stelle vorgesehene Auswurföffnung in dem Gehäuse 7 nach unten zu fallen.

Sowie die Rohrpostbüchse 36 aus dem Rohrstück 10 ausgetreten ist und der Rohrkontakt 37 ein entsprechendes Signal abgibt, wird das Rohrstück 10 wieder in die Ruhestellung zurückgeschwenkt, worauf auch der Schieber 29 von seiner Antriebsvorrichtung 28 in seine linke Grenzstellung gemäss Fig. 3 überführt wird, in der er die Bypass-Leitung 21 bei freigegebenem Fahrrohr 4 versperrt.

Die beschriebene Anordnung des lediglich zwischen zwei Grenzstellungen hin- und herzubewegenden Schiebers 29 ergibt ersichtlich besonders einfache und betriebssichere konstruktive Verhältnisse, weil der Schieber 29 wahlweise als Verschlussglied für die Bypass-Leitung 21 und als Verschlussstück für das Fahrrohr 4 wirkt. Diese Doppelfunktion des Schiebers 29 schliesst automatisch das Auftreten von Betriebszuständen aus, bei denen die Sicherheit der Anlage gefährdet wäre. Grundsätzlich ist es auch denkbar, die Verschlussglied- und Verschlussstückfunktion getrennten Verschlusselementen zuzuordnen, die sodann aber zwangsläufig miteinander gekoppelt sind, um die beschriebene Funktion zu gewährleisten.

## Patentansprüche

1. Für Durchlauf, Absendung und Empfang von Rohrpostbüchsen (36) eingerichtete Rohrpoststation, mit einem aus dem Zuge eines durchgehenden Fahrrohres (4) herausführbaren Rohrstück (10), das in seiner Ruhestellung beidends abgedichtet mit dem Fahrrohr (4) verbunden ist und durch das in der herausgeführten Stellung eine abkommende Rohrpostbüchse (36) zu einer Auffangstelle (39) überführbar ist, mit einem eine abzusendende Rohrpostbüchse (36) aufnehmenden, eine lösbare Sperre (35) für die Rohrpostbüchse (36) aufweisenden Speicherrohrstutzen (17), mit einer beidseitig des herausführbaren Rohrstückes (10) an das Fahrrohr (4) angeschlossenen und ein Ventil mit Ventilverschlussglied enthaltenden Bypass-Leitung (21), sowie mit einem im Zuge des Fahrrohres (4) zwischen den Anschlüssen der Bypass-Leitung (21) angeordneten Verschlussschieber (29), durch den der Luftstrom im Fahrrohr (4) zwischen den Anschlüssen der Bypass-Leitung (21) absperrbar ist, dadurch gekennzeichnet, dass dem herausführbaren Rohrstück (10), das an einem Ende (8a) des Fahrrohres (4) schwenkbar befestigt ist, eine eine abzusendende Rohrpostbüchse (36) in das Fahrrohr (4) einleitende Leitvorrichtung (18) zugeordnet ist, dass der Verschlussschieber (29) für das Fahrrohr (4) im Bereich des freien Endes (8b) des Fahrrohres (4) ausserhalb des herausführbaren Rohrstükkes (10) angeordnet und mit dem ebenfalls als Schieber ausgebildeten Verschlussglied der Bypass-Leitung (21) einheitlich ausgeführt ist und dass der Schieber (29) zwischen dem Fahrrohr (4) und einem neben diesem angeordneten Teil (32) der Bypass-Leitung (21) hin- und herverschieblich gelagert und mit einer signalgesteuerten Antriebsvorrichtung (28) gekuppelt ist, derart, dass in Abhängigkeit von einem den bevorstehenden Empfang einer Rohrpostbüchse (36) anzeigenden Empfangssignal bei geöffneter Bypass-Leitung (21) das Fahrrohr (4) verschlossen und bei im Normalbetrieb verschlossener Bypass-Leitung (21) das Fahrrohr (4) geöffnet ist.

2. Rohrpoststation nach Anspruch 1, dadurch gekennzeichnet, dass bei in der ausgeschwenkten Stellung stehendem Rohrstück (10) das Fahrrohr (4) durch den Verschlussschieber (29) verschlossen ist.

3. Rohrpoststation nach einem der vorhergehenden Ansprüche, dadurch gekennzeichnet, dass das herausschwenkbare Rohrstück (10) mit der Leitvorrichtung (18) für die abzusendenden Rohrpostbüchsen (33) gekuppelt ist.

4. Rohrpoststation nach Anspruch 3, dadurch gekennzeichnet, dass die Leitvorrichtung eine einenends im Bereiche des Speicherrohrstutzens (17) gelenkig gelagerte, mit dem herausschwenkbaren Rohrstück (10) verbundene Rinne (18) ist, auf die im Bereiche ihres freien Endes ein Führungsrohrstück (19) aufgesetzt ist.

5. Rohrpoststation nach einem der vorhergehenden Ansprüche, dadurch gekennzeichnet, dass sie ein kastenartiges Gehäuse (7) aufweist, in dem die Bypass-Leitung (21) entlang benachbarter Wände (16, 22, 23) verlaufend angeordnet ist und das eine Auswurföffnung und/oder ein Auffangbehältnis (39) für die jeweils ankommende Rohrpostbüchse (36) aufweist.

6. Rohrpoststation nach Anspruch 1, dadurch gekennzeichnet, dass der Schieber (29) in entsprechenden Führungen (27) auf der Oberseite eines einen Teil der Bypass-Leitung (21) bildenden, innerhalb des Gehäuses (7) angeordneten Kastens (26) abgedichtet verschieblich geführt ist.

## Claims

1. A pneumatic tube station equipped for transit, sending and receiving of pneumatic tube carriers (36), having a section of tube (10) capable of being retracted from the normal course of travel of a passing pneumatic transport tube (4), which section of tube (10) being connected with the transport tube (4) in such a manner that, in its position of rest, both of its ends are sealed to the transport tube (4), and through which an incoming pneumatic tube carrier (36) can be diverted to a receiving point (39) with the section of tube (10) in its retracted position, having a storage tube connection (17) capable of housing an outgoing pneumatic tube carrier (36), and releasable stopper means (35) for the pneumatic tube carrier (36), having a bypass (21) connected to the transport tube (4) on both sides of the retractable section of tube (10) and a valve with valve closing means, and having a closure slide (29) arranged along the course of the transport tube (4) between the connections of the bypass (21), by means of which the air flow in the transport tube (4) can be shut off between the connections of the bypass (21), characterized in that guide means (18) for introducing an outgoing pneumatic tube carrier (36) into the transport tube (4) are associated to the retractable section of tube (10), which is pivotally attached to one end (8a) of the transport tube (4), in that the closure slide (29) for the transport tube (4) is arranged in the area of the free end (8b) of the transport tube (4), outside the retractable section of tube (10), and forms part of the closure means of the bypass (21), which are also in the form of a slide, and in that the slide (29) is mounted between the transport tube (4) and a section (32) of the bypass (21) arranged adjacent thereto in such a manner that it can be slid back and forth and is coupled with signal-controlled drive means (28) in such a manner that in response to a receive signal indicating the impending arrival of a pneumatic tube carrier (36) the transport tube (4) is closed if the bypass (21) is open where as during normal operating conditions the transport tube (4) is open if the bypass (21) is closed.

2. The pneumatic tube station according to claim 1, characterized in that the transport tube (4) is closed by the closure slide (29) when the section of tube (10) is in the pivoted out position.

3. The pneumatic tube station according to either of the above claims, characterized in that the retractable section of tube (10) is coupled with the guide means (18) for the outgoing pneumatic tube carriers (33).

4. The pneumatic tube station according to claim 3, characterized in that the guide means comprise a chute (18), one end of which is pivotally mounted in the area of the storage tube connection (17) and which is connected with the retractable section of tube (10), with a guide section of tube (19) being attached to the free end of the chute (18).

5. The pneumatic tube station according to any of the above claims, characterized in that the station comprises a box-like housing (7), in which the bypass (21) is arranged in such a manner that it extends along adjacent walls (16, 22, 23) and it comprises an ejection opening and/or a receiving container (39) for the arriving pneumatic tube carrier (36).

6. The pneumatic tube station according to claim 1, characterized in that the slide (29) is slidably guided in a sealed manner in appropriate guides (27) on the top of a box (26) forming a portion of the bypass (21) and arranged within the housing (7).

## Revendications

1. Station pour système de poste pneumatique établie pour le passage, l'expédition et la réception de boîtes d'envoi (36), munie d'un tronçon tubulaire (10) qui, pouvant être écarté du trajet d'un tube de trafic continu (4) à sa position de repos, est raccordé à ses deux extrémités de façon étanche au tube de trafic (4) et par lequel, à sa position écartée, une boîte d'envoi (36) arrivant peut être amenée à un poste de réception (39), d'une tubulure d'attente (17) retenant une boîte d'envoi (36) à expédier et comportant un arrêt amovible (35) pour la boîte d'envoi (36), d'un conduit de dérivation (21) raccordé au tube de trafic (4) des deux côtés du tronçon écartable (10) et contenant une valve avec organe d'obturation ainsi que d'un tiroir d'obturation (29) placé dans le trajet du tube de trafic (4) entre les raccords du conduit de dérivation (21) et par lequel le courant d'air dans le tube de trafic (4) peut être arrêté entre les raccords du conduit de dérivation (21), caractérisé par le fait qu'au tronçon écartable (10) qui est fixé pivotable à une extrémité (8a) du tube de trafic (4), est associé un dispositif d'acheminement (18) introduisant dans le tube de trafic (4) une boîte d'envoi (36) à expédier, que le tiroir d'obturation (29) pour le tube de trafic (4) est installé dans la zone de l'extrémité libre (8b) du tube de trafic (4) à l'extérieur du tronçon écartable (10) et est réalisé en une seule unité avec l'organe d'obturation, également conçu en forme de tiroir, du conduit de dérivation (21), et que le tiroir (29) est monté déplaçable dans les deux sens entre le tube de trafic (4) et une partie (32), placée à côté de celui-ci, du conduit de dérivation (21) et est accouplé à un dispositif d'entraînement (28) commandé par signaux de façon qu'en cas de conduit de dérivation (21) ouvert, le tube de trafic (4) soit fermé en fonction d'un signal de réception indiquant l'arrivée imminente d'un tube d'envoi 36, et qu'en cas de conduit de dérivation (21) fermé en service normal, le tube de trafic (4) soit ouvert.

2. Station pour système de poste pneumatique selon la revendication 1, caractérisée par le fait que lorsque le tronçon tubulaire (10) se trouve à la position écartée, le tube de trafic (4) est fermé par le tiroir d'obturation (29).

3. Station pour système de poste pneumatique selon l'une des revendications précédentes, caractérisée par le fait que le tronçon tubulaire écartable (10) est accouplé au dispositif d'acheminement (18) pour les boîtes d'envoi (33) à expédier.

4. Station pour système de poste pneumatique selon la revendication 3, caractérisée par le fait que le dispositif d'acheminement est une goulotte (18) qui, à une extrémité, est montée articulée dans la zone de la tubulaire d'attente (17), qui est raccordée au tronçon tubulaire écartable (10) et sur laquelle un tronçon tubulaire de guidage (19) est monté dans la zone de son extrémité libre.

5. Station pour système de poste pneumatique selon l'une des revendications précédentes, caractérisée par le fait qu'elle comprend un boîtier (7) en forme de caisse dans lequel le conduit de dérivation (21) est disposé le long de parois voisines (16, 22, 23) et qui comporte une ouverture d'éjection et/ou une enceinte de réception (39) pour les boîtes d'envoi (36) arrivant individuellement.

6. Station pour système de poste pneumatique selon la revendication 1, caractérisée par le fait que le tiroir (29) est monté déplaçable de façon étanche dans des coulisses correspondantes (27) sur la face supérieure d'un caisson (26) formant une partie du conduit de dérivation (21) et disposé à l'intérieur du boîtier (7).

*Fig.1*

Fig. 2

**Fig. 3**